# EUROPÄISCHE PATENTSCHRIFT

(11) **EP 1 637 260 B1**
(45) Veröffentlichungstag und Bekanntmachung des Hinweises auf die Patenterteilung: **03.10.2007**
(21) Anmeldenummer: 05011444.6
(22) Anmeldetag: 27.05.2005
(51) Int. Cl.: B23B 31/28

(54) **Spanneinrichtung für Werkzeugmaschinen**
Clamping device for machine tool
Dispositif de verrouillage pour machine outil

(30) Priorität: 05.08.2004 DE 102004037964
(43) Veröffentlichungstag der Anmeldung: 22.03.2006
(73) Patentinhaber: Hiestand, Karl, D-88630 Pfullendorf (DE)
(72) Erfinder: Hiestand, Karl, D-88630 Pfullendorf (DE)
(74) Vertreter: Engelhardt, Guido

(56) Entgegenhaltungen:
- EP-A- 0 234 230
- EP-A- 1 114 685
- US-A- 4 748 357

## Beschreibung

Die Erfindung bezieht sich auf eine Spanneinrichtung für eine Werkzeugmaschine, die mit einem kraftbetätigten Spannfutter zur Halterung eines Werkstückes versehen und dessen Spannbacken mittels der Spanneinrichtung über eine axial verstellbare Zugstange betätigbar ist, wobei die Spanneinrichtung aus einem umschaltbaren Motor, vorzugsweise einem elektrischen Servomotor oder einem Hydromotor, und zwischen diesem und der Zugstange angeordnete einen Antriebsstrang bildende Getriebeglieder besteht, mittels denen die zur Verstellung der Spannbacken des Kraftspannfutters erforderlichen rotorischen Verstellbewegungen des Abtriebsgliedes des Motors in axiale Verstellbewegungen der Zugstange umsetzbar sind, wobei der umschaltbare Motor als Antriebs- und Stützglied achsparallel zur Zugstange angeordnet ist.

Derartige Spanneinrichtungen sind in zahlreichen sehr unterschiedlichen Ausgestaltungen bekannt. Vielfach dient, wie dies zum Beispiel der DE 32 28 749 C2 zu entnehmen ist, zur Verstellung der Zugstange ein mit dieser verbundener beidseitig von Druckmittel beaufschlagbarer und in einen Zylinder eingesetzter Kolben. Außer der Baugröße des Druckzylinders ist des Weiteren bei diesen Ausführungsformen von Nachteil, dass stets ein hochgespanntes Druckmittel zur Verfügung stehen muss, um den Druck in dem Zylinder und somit die über die Spannbacken auf ein eingespanntes Werkstück ausgeübte Spannkraft aufrecht zu erhalten. Bei elektrischen Spanneinrichtungen, wie zum Beispiel gemäß der EP 0 234 230 B1, ist meist ein großer Bauaufwand erforderlich, vor allem aber ist hierbei von Nachteil, dass eine Vielzahl von Bauteilen ständig umlaufen und dass dadurch bedingt hohe Betriebsgeräusche verursacht werden.

Dies gilt in gleicher Weise auch für die elektromechanische Vorrichtung zum Erzeugen einer Axialkraft für die Betätigung von Spannzeugen nach der US-A- 4,748,357. Die Relativbewegungen zwischen dem Rotor und dem Stator des Motors werden hierbei über ein Stirnradgetriebe und einen Spindeltrieb als Axialbewegung auf die Zugstange übertragen, wobei der Rotor mit einem Ritzel verbunden ist, in das mindestens ein Zahnrad eingreift, das auf einer axial unverschiebbar gelagerten Spindel befestigt ist. Über eine Spindelmutter ist die Spindel mit der Zugstange verbunden. Bei dieser Einrichtung sind auch der Bauaufwand sowie die Baugröße erheblich.

Aufgabe der Erfindung ist es daher, eine Spanneinrichtung für Werkzeugmaschinen der vorgenannten Art zu schaffen, die klein baut und somit auf wirtschaftliche Weise herzustellen ist. Vor allem aber soll erreicht werden, dass die Spannkraft der Spannbacken aufrecht erhalten werden kann, ohne dass dazu Bauteile der Spanneinrichtung motorisch anzutreiben sind und hohe Betriebsgeräusche in Kauf genommen werden müssen. Des Weiteren soll die Spanneinrichtung sowohl mit elektrischer Energie als auch mittels eines Druckmittels betätigbar sein, so dass ein vielseitiger Einsatz bei hoher Funktionalität und einfacher Handhabung gegeben ist.

Gemäß der Erfindung wird dies bei einer Spanneinrichtung der eingangs genannten Gattung dadurch erreicht, dass als Antriebsstrang eine trieblich mit dem Motor gekoppelte, vorzugsweise auf einer mit der Maschinenspindel verbundenen Hohlwelle drehbar gelagerte Glocke sowie ein verdrehfest abgestütztes Zwischenglied vorgesehen sind, die zur Umwandlung der Drehbewegungen der Glocke über ineinander greifende Gewindeglieder miteinander verbunden sind, und dass zur Betätigung der Zugstange das Zwischenglied unmittelbar oder über eine dieses tragende Schiebemuffe mit der Zugstange in Triebverbindung steht

Zweckmäßig ist es hierbei, die vorzugsweise mittels eines Wälzlagers und eines Lagerrings auf der Hohlwelle gelagerte. Glocke über einen Zahnriemen, ein Zahnradvorgelegegetriebe oder ähnliche Getriebemittel trieblich mit dem Abtriebsglied des Motors zu verbinden.

Zur Umwandlung der Drehbewegungen der Glocke ist es angezeigt, diese mittels eines Innengewindes in ein an einem Zwischenglied vorgesehenes Außengewinde eingreifen zu lassen und das Zwischenglied verdrehfest und axial verschiebbar abzustützen sowie trieblich mit der Zugstange zu verbinden. Die Glocke kann aber auch über einen vorzugsweise mit einer Rollenrückführung ausgestatteten Rollengewindetrieb mit dem Zwischenglied trieblich verbunden sein.

Zur trieblichen Verbindung des Zwischengliedes mit der Zugstange können mindestens zwei verschwenkbar auf ortsfest angeordnete Bolzen gelagerte Umlenkhebel vorgesehen sein, die mit ihren äußeren Enden trieblich mit der axial verschiebbaren Schiebemuffe und mit ihren inneren Enden mit der Zugstange verbunden sind. Die die Umlenkhebel tragenden Bolzen können hierbei in der mit der Maschinenspindel der Werkzeugmaschine verbundenen Hohlwelle drehbar gelagert sein und die Umlenkhebel sollten an ihren äußeren und/oder an ihren inneren Enden jeweils mit einer Verzahnung versehen oder ballig ausgebildet sein, die in an der axial verschiebbaren Schiebemuffe und/oder der Zugstange angearbeitete Verzahnungen bzw. in Ausnehmungen eingreifen.

Nach einer andersartigen Ausgestaltung können zur trieblichen Verbindung der Schiebemuffe mit der Zugstange mindestens zwei Zahnräder oder Zahnsegmente vorgesehen werden, die drehbar auf einem in einer mit der Zugstange fest verbundenen Hülse gelagerten Bolzen angeordnet sind und die in an der axial verschiebbaren Schiebemuffe und der mit der Maschinenspindel fest verbundenen Hohlwelle vorgesehenen Verzahnungen oder Ausnehmungen eingreifen.

Die an der axial verschiebbaren Schiebemuffe vorgesehenen Verzahnungen sollten jeweils durch ein an diesem befestigten Zahnsegment gebildet sein.

Die Glocke und/oder das axial verschiebbare Zwischenglied sollten mittels Spindellager auf der mit der Maschinenspindel verbundenen Hohlwelle drehbar gelagert sein.

Nach einer Weiterausbildung ist vorgesehen, die Glocke, das axial verschiebbare Zwischenglied, die Schiebemuffe, den Lagerring der Glocke, die Hülse und/oder weitere Bauteile der Spanneinrichtung jeweils mit einem oder mehreren vorzugsweise axial gerichteten Kühlmittelkanälen auszustatten, denen Kühlmittel zuführbar ist. Um in der Spanneinrichtung einen Staudruck aufzubauen, können die Kühlmittelkanäle vorzugsweise in deren Endbereichen mit Drosseln versehen sein.

Wird eine Spanneinrichtung gemäß der Erfindung ausgebildet, so kann die Spannkraft der Spannbacken des Kraftspannfutters aufrechterhalten werden, ohne dass dazu Bauteile der Spanneinrichtung umlaufen müssen. Lediglich zum Spannen eines Werkstückes und zum Lösen der Spannbacken sind mittels des Motors der Spanneinrichtung rotorische Verstellbewegungen auszuführen, die über den Antriebsstrang in axiale Verstellbewegungen umzuwandeln und auf die Zugstange zu übertragen sind.

Der Bauaufwand, mittels dem dies zu bewerkstelligen ist, ist gering, so dass auch eine wirtschaftliche Fertigung der Spanneinrichtung, zumal vielfach handelsübliche Bauteile eingesetzt werden können, gegeben ist. Vor allem aber ist von Vorteil, dass die äußeren Bauteile der Spanneinrichtung nicht mit der Maschinenspindel verbunden sind und umlaufen und somit keine dadurch bedingten Betriebsgeräusche in Kauf zu nehmen sind. Auch ist es mittels des Motors der Spanneinrichtung ohne Schwierigkeiten möglich, den jeweiligen Verstellweg der Spannbacken und demnach deren Betriebstellung zu ermitteln, so dass eine zusätzliche Überwachung nicht erforderlich, aber dennoch auf einfache Weise zu bewerkstelligen ist. Mit geringem Bauaufwand ist aufgrund der vorschlagsgemäßen Ausgestaltung eine Spanneinrichtung geschaffen, die über einen langen Zeitraum bei hoher Betriebssicherheit die Einspannung von Werkstücken an einer Werkzeugmaschine ermöglicht.

In der Zeichnung sind ein Ausführungsbeispiel sowie Ausführungsvarianten der gemäß der Erfindung ausgebildeten Spanneinrichtung dargestellt, die nachfolgend im einzelnen erläutert sind. Hierbei zeigen:
- Figur 1: die in einer Werkzeugmaschine eingebaute Spanneinrichtung, in schematischer Darstellung und in unterschiedlichen Betriebsstellungen,
- Figur 2: die Spanneinrichtung nach Figur 1 in konstruktiver Ausgestaltung, in einem Längsschnitt und in unterschiedlichen Betriebsstellungen,
- Figur 3: die Spanneinrichtung nach Figur 1 in einer Ausführungsvariante, in schematischer Darstellung und in unterschiedlichen Betriebsstellungen,
- Figur 4: die Spanneinrichtung nach Figur 1 in konstruktiver Ausgestaltung, in einem Axialschnitt und in unterschiedlichen Betriebsstellungen,
- Figur 5.: die Spanneinrichtung nach Figur 4 in einem Halbschnitt, in vergrößerter Darstellung,
- Figur 6: einen achssenkrechten Schnitt durch die Spanneinrichtung nach Figur 3 nach der Linie VI-VI,
- Figur 7: eine weitere Ausführungsvariante der Spanneinrichtung nach Figur 1, in schematischer Darstellung und in unterschiedlichen Betriebsstellungen,
- Figur 8: die Spanneinrichtung nach Figur 7 in konstruktiver Ausgestaltung, in einem Axialschnitt und in unterschiedlichen Betriebsstellungen,
- Figur 9: die Spanneinrichtung nach Figur 7 in einem Halbschnitt in vergrößerter Darstellung, und
- Figur 10: einen achssenkrechten Schnitt durch die Spanneinrichtung nach Figur 7 nach der Linie X-X

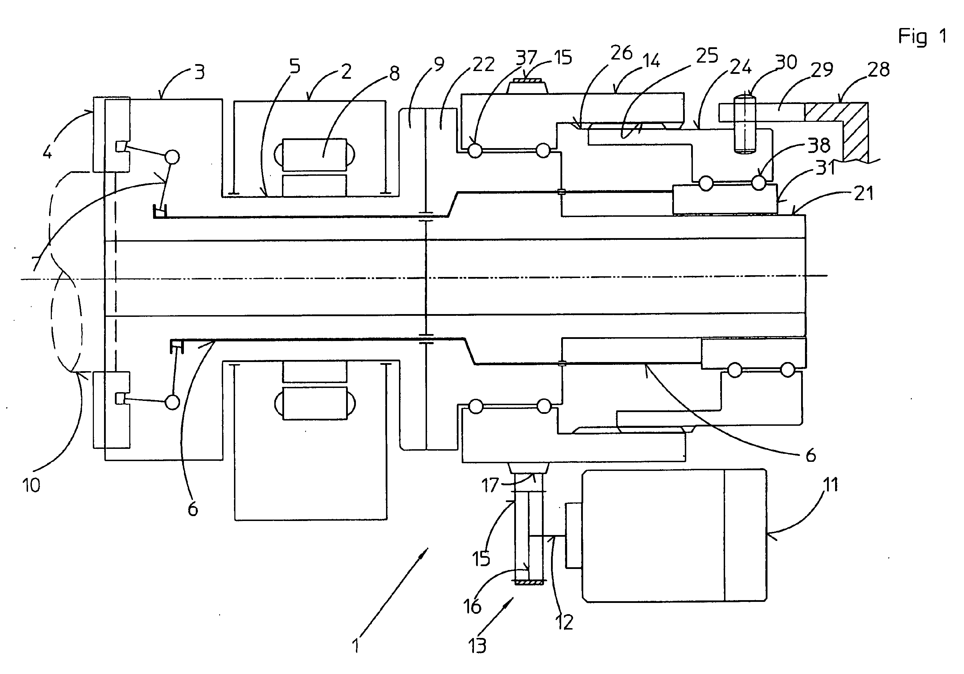

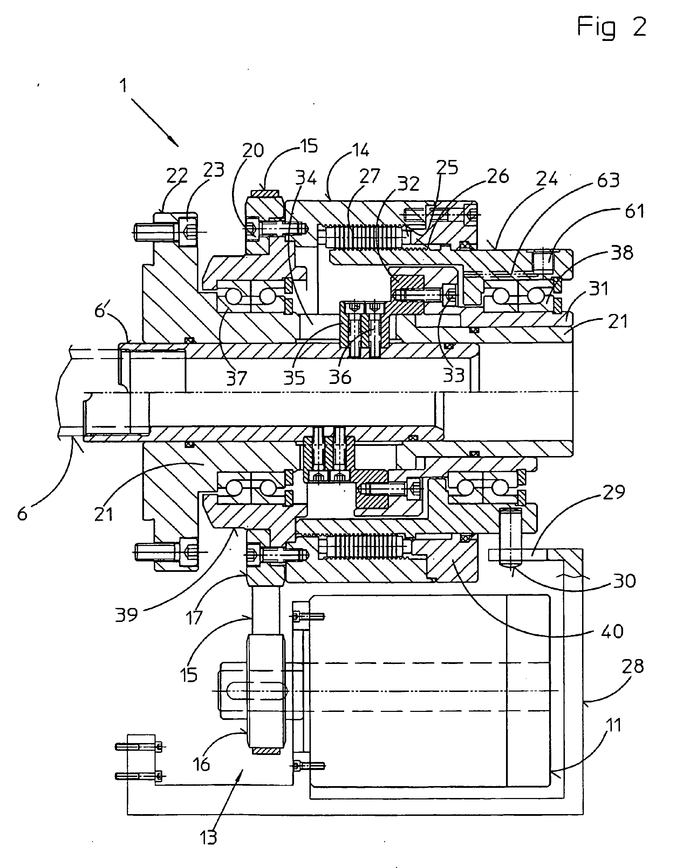

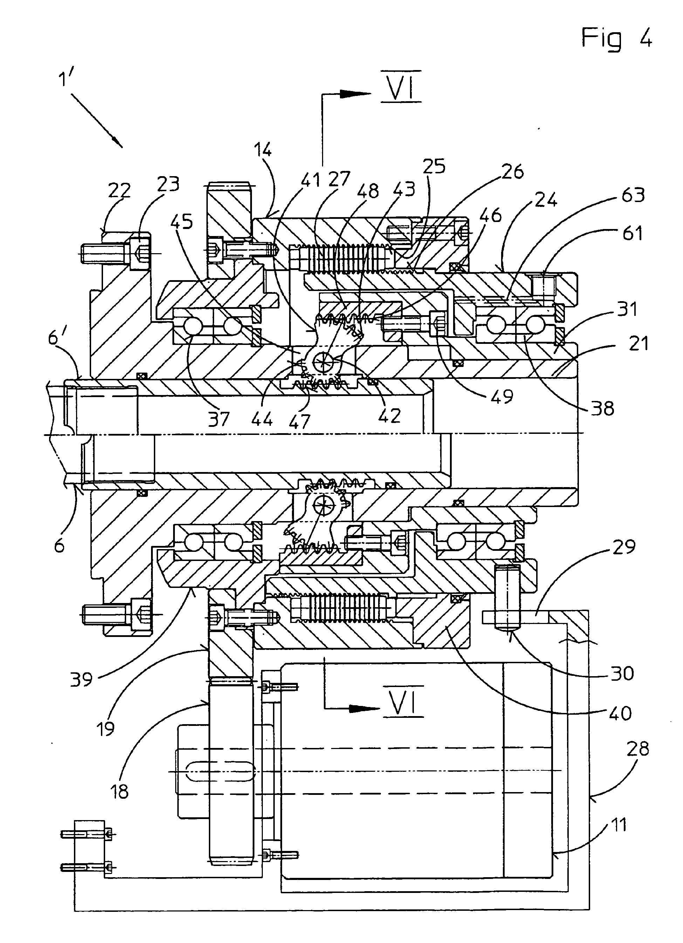

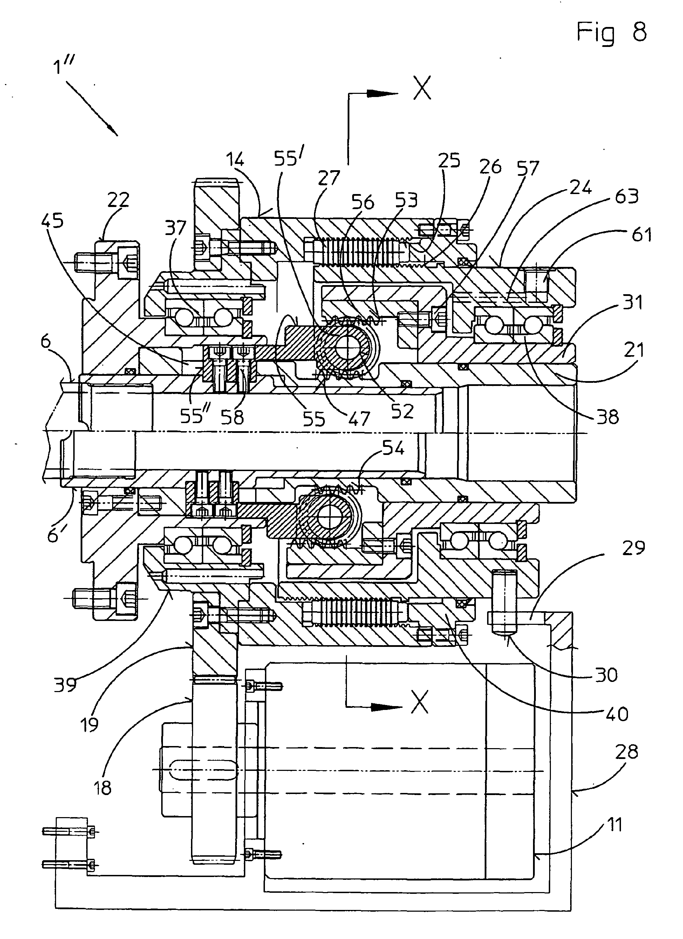

Die in den Figuren 1, 3 und 7 in schematischer und in den Figuren 2, 4 und 8 in konstruktiver Ausgestaltung jeweils in unterschiedlichen Betriebstellungen dargestellte und mit 1, 1' bzw. 1" bezeichnete Spanneinrichtung dient zur Betätigung eines auf einer Werkzeugmaschine 2 angeordneten kraftbetätigten Spannfutters 3, mittels dessen verstellbaren Spannbacken 4 ein zu bearbeitendes Werkstück 10 in dem Spannfutter 3 einspannbar ist, und besteht im wesentlichen aus einem Motor 11 und einem Antriebsstrang 13, mittels dem die rotorischen Verstellbewegungen des Motors 11 in axiale Verstellbewegungen umsetzbar sind. Über eine Zugstange 6, die die mittels eines Motors 8 antreibbare Spindel 5 der Werkzeugmaschine 2 durchgreift und bei den gezeigten Ausführungsbeispielen über Hebel 7 mit den Spannbacken 4 in Triebverbindung steht, werden die in der Spanneinrichtung 1, 1' bzw. 1" ausgelösten axialen Verstellbewegungen auf die Spannbacken 4 übertragen. Die Spindel 5 ist des Weiteren mit einem Flansch 9 versehen, an dem eine ebenfalls mit einem Flansch 22 ausgestattete Hohlwelle 21 befestigt ist, die die Spanneinrichtung 1, 1' bzw. 1" trägt.

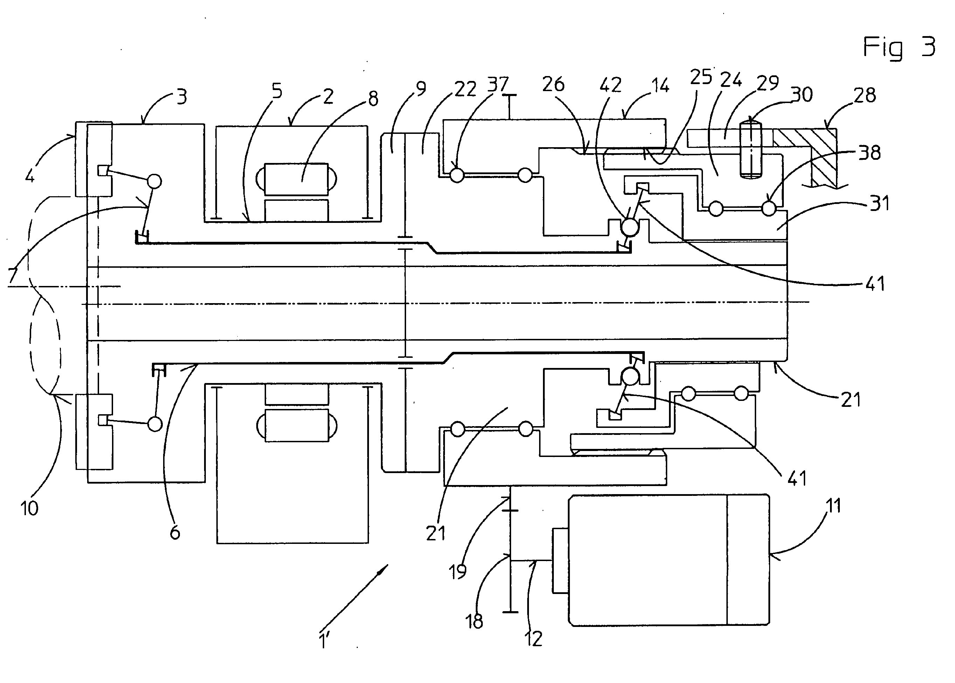

Der Antriebsstrang 13 ist durch eine trieblich mit dem Abtriebsglied 12 des Motors 11 verbundenen Glocke 14, einem mit dieser gekoppelten Zwischenstück 24 sowie einer Hülse 31 gebildet, an der die Zugstange 6 befestigt ist. Zur trieblichen Verbindung der Glocke 14 mit dem Abtriebsglied 12 des Motors 11 ist bei dem gezeigten Ausführungsbeispiel nach den Figuren 1 und 2 ein Zahnriemen 15 vorgesehen, der in mit dem Abtriebsglied 12 und der Glocke 14 verbundene Riemenscheiben 16 bzw. 17 eingreift. Gemäß Figur 3 kann zu dem gleichen Zweck aber auch ein durch Zahnräder 18 und 19 gebildetes Vorgelegegetriebe vorgesehen werden.

Die mittels des Motors 11, der als elektrischer Servomotor als oder als Hydromotor ausgebildet sein kann, ausgelösten Verstellbewegungen werden auf die Glocke 14 übertragen und deren Drehbewegungen werden im Zusammenwirken mit dem Zwischenglied 24 in axiale Verstellbewegungen umgewandelt. Um dies zu bewerkstelligen ist in die Glocke 14 ein Innengewinde 25 eingearbeitet und das Zwischenglied 24 weist ein Außengewinde 26 auf. Außerdem ist das Zwischenglied 24 mit Hilfe eines abstehenden Bolzens 30, der in einen Längsschlitz 29 eines Halters 28 eingreift, drehfest abgestützt, so dass bei einer Verschraubung der Glocke 14 in dem Zwischenglied 24 dieses axial nach links oder rechts bewegt wird. Und da das Zwischenglied 24, wie dies insbesondere der Figur 2 entnommen werden kann, mit einem an der Zugstange 6 fest angeschlossenen Rohrstück 6' verbunden ist, wird dieses in gleicher Weise verstellt.

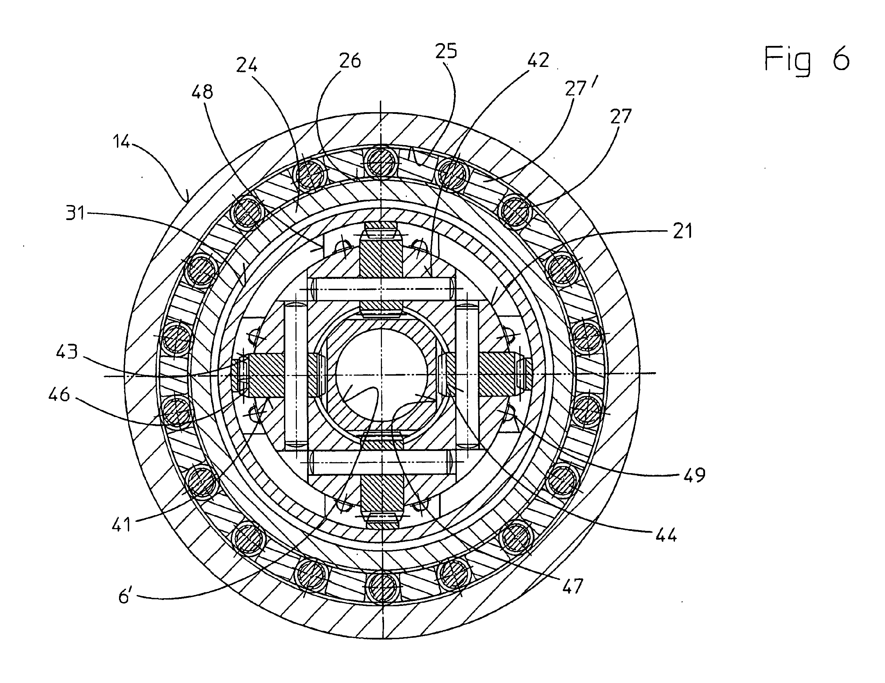

Nach der konstruktiven Ausgestaltung greift das Innengewinde 25 der Glocke 14 nicht unmittelbar in das Außengewinde 26 des Zwischengliedes 24, sondern über einen Rollengewindetrieb, der aus in einen Käfig 27' mit Abstand zueinander angeordneten mit Rückführung ausgestatteten Rollen 27 (Figur 6) besteht, ein. Auf diese Weise werden Reibungsverluste reduziert.

Das Zwischenglied 24 ist über ein Spindellager 38 drehbar auf der Hülse 31 abgestützt, über das auch die axialen Verstellbewegungen auf die Hülse 31 übertragen werden. Zur Übertragung der Verstellbewegungen auf das Rohrstück 6' sind an der Hülse 31 mittels Schrauben 33 mehrere Ringsegmente 32 befestigt, an deren freien Enden jeweils ein Ansatzstück 35 mittels Schrauben 36 gehalten ist, die in der Hohlwelle 21 eingearbeitete Ausnehmungen 34 durchgreifen und zusammen mit den Schrauben 36 mit dem Rohrstück 6' verbunden sind. Die Glocke 14, an der mittels Schrauben 20, die Riemenscheibe 17 befestigt und axial fixiert ist, ist ebenfalls über ein Spindellager 37 auf der Hohlwelle 21 drehbar gelagert. Dazu dient ein Lagerring 39, der zusammen mit der Riemenscheibe 17 an der Glocke 14 gehalten ist. Auf der der Riemenscheibe 17 gegenüber liegenden Seite ist die Glocke 14 durch einen aufgeschraubten Deckel 40 verschlossen.

Zum Öffnen oder Schließen des Spannfutters 3 ist bei der Spanneinrichtung 1 lediglich der Motor 11 kurzzeitig zu betätigen. Die entsprechenden rotorischen Verstellbewegungen des Abtriebsgliedes 12 werden unabhängig davon, ob die Maschinenspindel 5 still steht oder zusammen mit der an dieser mittels des Flansches 22 und Schrauben 23 befestigten Hohlwelle 21 umläuft, über die Getriebeglieder des Antriebsstranges 13 umgewandelt und als axiale Verstellbewegungen auf die Zugstange 6 übertragen, durch die die Spannbacken 4 betätigt werden. Nach dem Einspannen des Werkstückes 10 wird die Spannkraft durch den Motor 11 aufrecht erhalten, da dieser mit dem gegebenen Motormoment in gleicher Weise auf die Spannbacken 4 einwirkt.

Bei der in den Figuren 3 bis 6 dargestellten Ausführungsvarianten der Spanneinrichtung 1' sind zur Übertragung der axialen Verstellbewegungen des Zwischengliedes 24 auf die Zugstange 6 bzw. auf das mit dieser verbundenen Rohrstück 6' mehrere gleichmäßig über den Umfang verteilt angeordnete Umlenkhebel 41 vorgesehen, die verschwenkbar auf Bolzen 42 gehalten sind und in der Hohlwelle 21 vorgesehene Freisparungen 45 durchgreifen. Die Bolzen 42 sind hierbei, wie dies insbesondere der Figur 6 zu entnehmen ist, in der Hohlwelle 21 gehalten, und die Umlenkhebel 41 sind am äußeren und am inneren Ende jeweils mit einer Verzahnung 43 bzw. 44 ausgestattet. Mit den Verzahnungen 43 und 44 greifen die Umlenkhebel 41 in an dem Zwischenstück 24 mittels Schrauben 49 befestigte mit einer Verzahnung 46 versehene Zahnsegmente 48 und in in das Rohrstück 6' eingearbeitete Verzahnungen 47 ein, so dass eine formschlüssige Verbindung zwischen dem Zwischenstück 24 und dem Rohrstück 6' gegeben ist.

Durch den Abstand der Verzahnungen 43 und 44 der Umlenkhebel 41 von der Mittelachse der Bolzen 42 kann der Verstellweg des Zwischengliedes 24 entsprechend übersetzt werden, so dass mitunter hohe Spannkräfte auf die Spannbacken 4 zu übertragen sind.

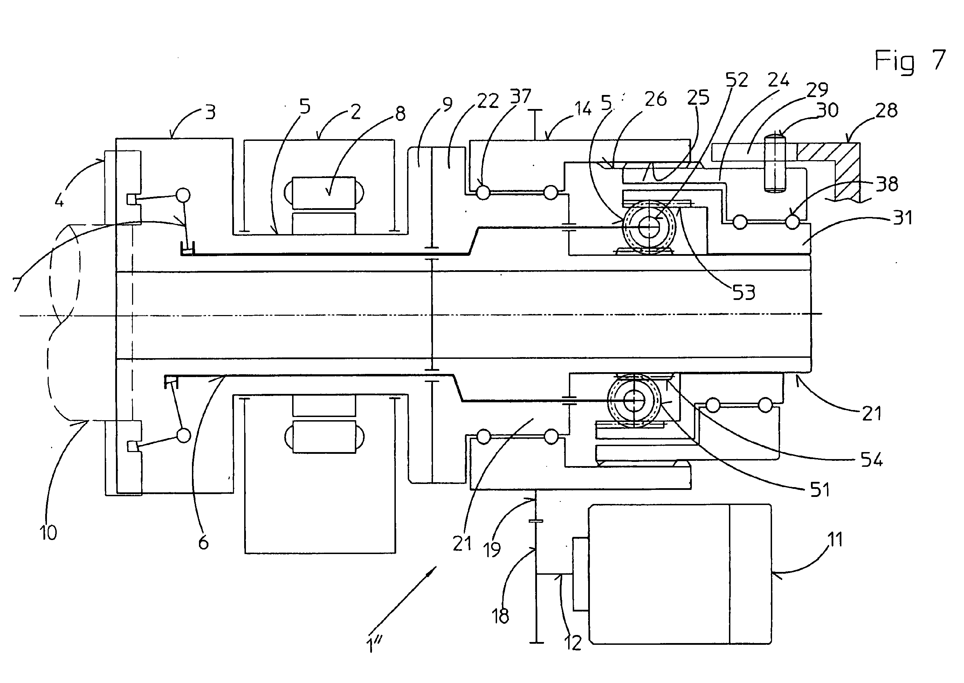

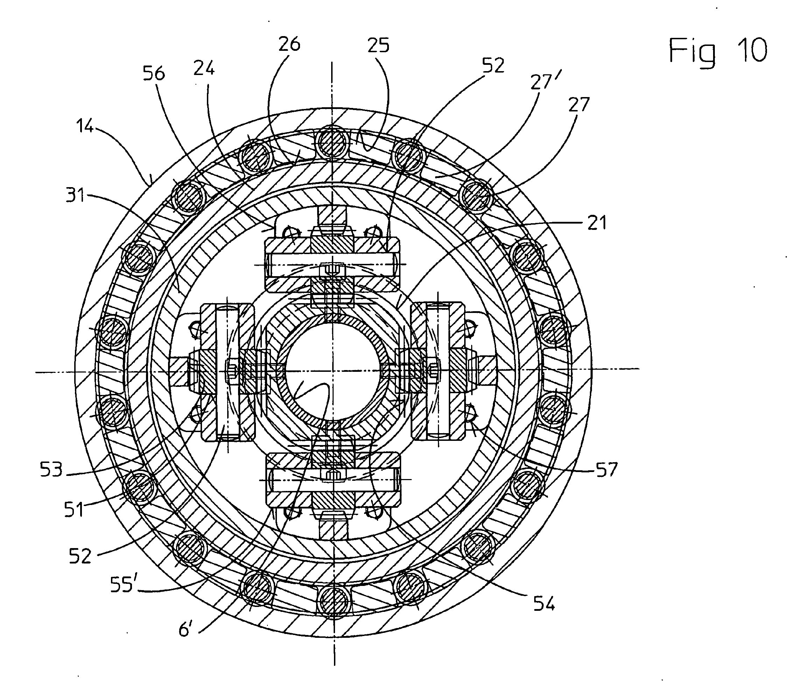

Gemäß der Ausführungsvariante der Spanneinrichtung 1" nach den Figuren 7 bis 10 dienen zur Übertragung der axialen Verstellbewegungen des Zwischengliedes 24 auf das Rohrstück 6' und somit auf die Zugstange 6 und die Spannbacken 4 mehrere über den Umfang verteilt angeordnete Zahnräder 51, die drehbar auf Bolzen 52 gelagert sind und in Verzahnungen 53 und 54 eingreifen. An der Hülse 31 sind wiederum mittels Schrauben 57 mit den Verzahnungen 53 versehene Zahnsegmente 56 angebracht, die Verzahnungen 54 sind dagegen unmittelbar in die mit der Maschinenspindel 5 verbundene axial ortsfest angeordnete Hohlwelle 21 eingearbeitet.

Die Bolzen 52 sind in ausgefrästen Ansatzstücken 55' einer Hülse 55 gehalten, die mittels Schrauben 58 mit dem Rohrstück 6' fest verbunden sind. Die axialen Vertellbewegungen der Bolzen 52, die bei einer Axialverschiebung des Zwischenstückes 24 durch Abwälzen der Zahnräder 41 in den Verzahnungen 54 ausgelöst werden, werden somit um die Hälfte reduziert auf das Rohrstück 6' übertragen.

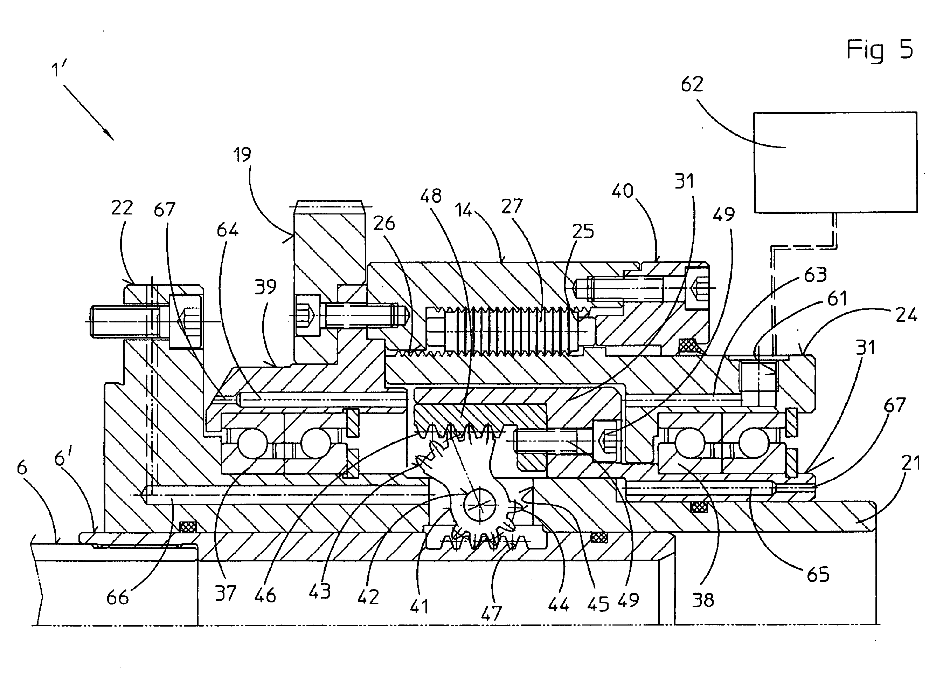

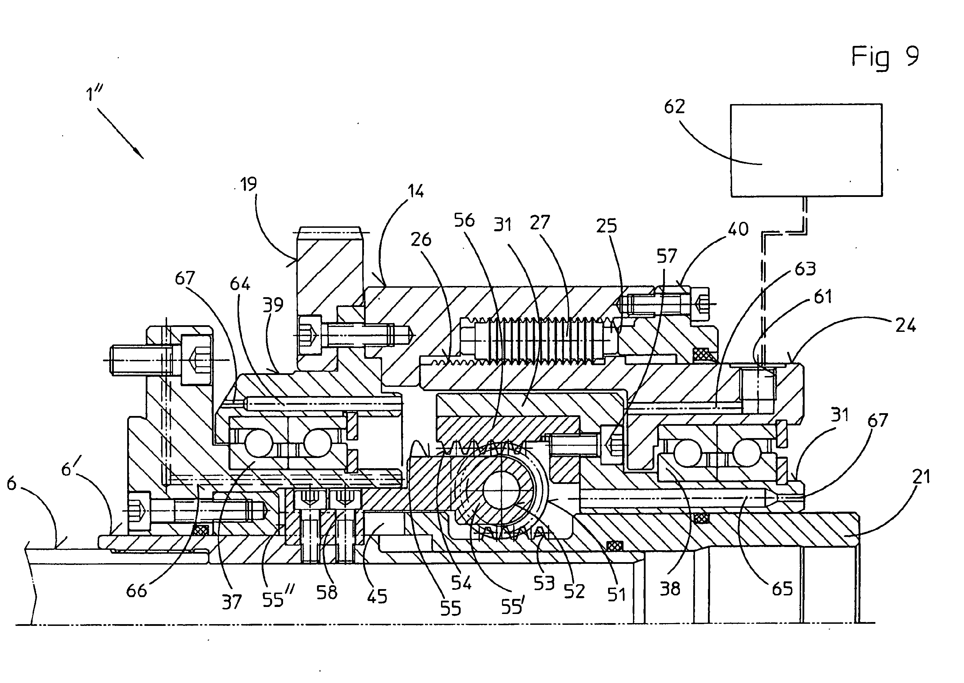

In das Zwischenstück 24, dem Lagerring 39, der Hülse 31 sowie die Hohlwelle 21 sind, wie dies insbesondere den Figuren 5 und 9 zu entnehmen ist, jeweils mehrere Kühlmittelkanäle 63, 64, 65 bzw. 66 eingearbeitet, denen über einen in dem Zwischenstück 24 vorgesehenen Anschluss 61 aus einem Kühlaggregat 62 Kühlmittel zum Beispiel in Form von gekühlter Luft zugeführt wird. Da die Kühlmittelkanäle 63, 64 und 65 in ihren Endbereichen jeweils Drosseln 67 aufweisen, wird in der Spanneinrichtung 1,1' bzw. 1" ein Staudruck aufgebaut, so dass die in den Spindellagern 37 und/oder 38 und eventuell auch an anderen Bauteilen anfallende Wärmemenge von dem Kühlmittel aufgenommen und aus der Spanneinrichtung 1, 1' bzw. 1" herausgeführt wird.

## Patentansprüche

1. Spanneinrichtung (1) für Werkzeugmaschinen (2), die mit einem kraftbetätigten Spannfutter (3) zur Halterung eines Werkstückes (10) versehen und dessen Spannbacken (4) mittels der Spanneinrichtung (1) über eine axial verstellbare Zugstange (6) betätigbar sind, wobei die Spanneinrichtung (1) aus einem umschaltbaren Motor (11), vorzugsweise einem elektrischen Servomotor oder einem Hydromotor, und zwischen diesem und der Zugstange (6) angeordnete einen Antriebsstrang (13) bildende Getriebeglieder (14, 15 bzw. 18, 19, 24, 25, 26, 27) besteht, mittels denen die zur Verstellung der Spannbacken (4) des Kraftspannfutters (3) erforderlichen rotorischen Verstellbewegungen des Abtriebsgliedes (12) des Motors (11) in axiale Verstellbewegungen der Zugstange (6) umsetzbar sind,
wobei der umschaltbare Motor (11) als Antriebs- und Stützglied achsparallel zur Zugstange (6) angeordnet ist,
**dadurch gekennzeichnet,**
**dass** als Antriebsstrang (13) eine trieblich mit dem Motor (11) gekoppelte, vorzugsweise auf einer mit der Maschinenspindel (5) verbundenen Hohlwelle (21) drehbar gelagerte Glocke (14) sowie ein verdrehfest abgestütztes Zwischenglied (24) vorgesehen sind, die zur Umwandlung der Drehbewegungen der Glocke (14) über ineinander greifende Gewindeglieder (25, 26 bzw. 25, 26, 27) miteinander verbunden sind, und dass zur Betätigung der Zugstange (6) das Zwischenglied (24) unmittelbar oder über eine dieses tragende Schiebemuffe (31) mit der Zugstange (6, 6') in Triebverbindung steht.

2. Spanneinrichtung nach Anspruch 1,
**dadurch gekennzeichnet,**
**dass** die vorzugsweise mittels eines Wälzlagers (37) und eines Lagerrings (39) auf der Hohlwelle (21) gelagerten Glocke (14) über einen Zahnriemen (15), ein Zahnradvorgelegegetriebe (18, 19) oder ähnliche Getriebemittel trieblich mit dem Abtriebsglied (12) des Motors (11) verbunden ist.

3. Spanneinrichtung nach Anspruch 1 oder 2,
**dadurch gekennzeichnet,**
**dass** zur Umwandlung der Drehbewegungen der Glocke (14) diese mittels eines Innengewindes (25) in ein an einem Zwischenglied (24) vorgesehenes Außengewinde (26) eingreift, und dass das Zwischenglied (24) verdrehfest und axial verschiebbar abgestützt sowie trieblich mit der Zugstange (6) verbunden ist.

4. Spanneinrichtung nach einem
der Ansprüche 1 bis 3,
**dadurch gekennzeichnet,**
**dass** die Glocke (14) über einen vorzugsweise mit einer Rollenrückführung ausgestatteten Rollengewindetrieb (27, 27') mit dem Zwischenglied (24) trieblich verbunden ist.

5. Spanneinrichtung nach einem
der Ansprüche 1 bis 4,
**dadurch gekennzeichnet,**
**dass** zur trieblichen Verbindung des Zwischengliedes (24) mit der Zugstange (6) mindestens zwei verschwenkbar auf ortsfest angeordnete Bolzen (42) gelagerte Umlenkhebel (41) vorgesehen sind, die mit ihren äußeren Enden trieblich mit der axial verschiebbaren Schiebemuffe (31) und mit ihren inneren Enden mit der Zugstange (6) verbunden sind.

6. Spanneinrichtung nach Anspruch 5,
**dadurch gekennzeichnet,**
**dass** die die Umlenkhebel (41) tragenden Bolzen (42) in der mit der Maschinenspindel (5) der Werkzeugmaschine (2) verbundenen Hohlwelle (21) drehbar gelagert sind.

7. Spanneinrichtung nach Anspruch 5 oder 6,
**dadurch gekennzeichnet,**
**dass** die Umlenkhebel (41) an ihren äußeren und/oder an ihren inneren Enden jeweils mit einer Verzahnung (43, 44) versehen oder ballig ausgebildet sind, die in an der axial verschiebbaren Schiebemuffe (31) und/oder der Zugstange (6) angearbeitete Verzahnungen (46, 47) oder in die Zugstange eingearbeitete Ausnehmungen eingreifen.

8. Spanneinrichtung nach einem
der Ansprüche 1 bis 4,
**dadurch gekennzeichnet,**
**dass** zur trieblichen Verbindung der Schiebemuffe (31) mit der Zugstange (6) mindestens zwei Zahnräder (51) oder Zahnsegmente vorgesehen sind, die drehbar auf einem in einer mit der Zugstange (6) fest verbundenen Hülse (55) gelagerten Bolzen (52) angeordnet sind und die in an der axial verschiebbaren Schiebemuffe (31) und der mit der Maschinenspindel (5) fest verbundenen Hohlwelle (21) vorgesehenen Verzahnungen (53, 54) oder Ausnehmungen eingreifen.

9. Spanneinrichtung nach Anspruch 7 oder 8,
**dadurch gekennzeichnet,**
**dass** die an der axial verschiebbaren Schiebemuffe (31) vorgesehenen Verzahnungen (46; 53) jeweils durch ein an diesen befestigtes Zahnsegment (48; 56) gebildet sind.

10. Spanneinrichtung nach einem
der Ansprüche 1 bis 9,
**dadurch gekennzeichnet,**
**dass** die Glocke (14) und/oder das axial verschiebbare Zwischenglied (24) mittels Spindellager (37, 38) auf der mit der Maschinenspindel (2) verbundenen Hohlwelle (21) drehbar gelagert sind.

11. Spanneinrichtung nach einem
der Ansprüche 1 bis 10,
**dadurch gekennzeichnet,**
**dass** die Glocke (14), das axial verschiebbare Zwischenglied (24), die Schiebemuffe (31), der Lagerring (39), der Glocke (14), die Hülse (55) und/oder weitere Bauteile der Spanneinrichtung (1, 1', 1 ") jeweils mit einem oder mehreren vorzugsweise axial gerichteten Kühlmittelkanälen (63, 64, 65, 66) versehen sind.

12. Spanneinrichtung nach einem
der Ansprüche 1 bis 11,
**dadurch gekennzeichnet,**
**dass** die Kühlmittelkanäle (63, 64, 65, 66) mit vorzugsweise in deren Endbereichen angeordneten Drosseln (67) versehen sind.

## Claims

1. A clamping device (1) for machine tools (2) that is equipped with a power-operated chuck (3) for holding a workpiece (10), the clamping jaws (4) of which can be actuated using the clamping device (1) by means of an axially moveable draw rod (6), in which the clamping device (1) consists of a motor (11) with a changeover function, preferably an electrical servomotor or hydraulic motor and, arranged between this and the draw rod (6), a driveline (13) consisting of gearing elements (14, 15 or 18, 19, 24, 25, 26, 27) by means of which the rotational displacement movements of the drive element (12) of the motor (11) needed to move the clamping jaws (4) of the power-operated chuck (3) can be converted into axial displacement movements of the draw rod (6) and in which the motor (11) with a changeover function is arranged as an actuator and support element axially in parallel to the draw rod (6),
**characterized in that**,
the driveline (13) is configured as a bell (14) in a rotating mounting on the hollow shaft (21) that is in a driven connection with the motor (11) and, in a preferred embodiment, connected with the machine spindle (5), as well as an intermediate element (24) supported in a non-rotating arrangement, the bell (14) and the intermediate element (24) being connected together by meshing thread elements (25, 26 or 25, 26, 27) in order to convert the rotating movements of the bell (14), and that the intermediate element (24) is in a driven connection with the draw rod (6, 6') either directly or via a sliding sleeve (31) that carries the intermediate element (24), in order to actuate the draw rod (6).

2. The clamping device in accordance with Claim 1,
**characterized in that**,
the bell (14) that is, in a preferred embodiment, mounted on the hollow shaft (21) by means of a roller bearing (37) and a bearing race (39) is in a driven connection with the output element (12) of the motor (11) by means of a toothed belt (15), a countershaft gear unit (18, 19) or similar gearing.

3. The clamping device in accordance with Claim 1 or 2,
**characterized in that**,
in order to convert the rotational movements of the bell (14), the bell (14) engages in an external thread (26) provided on an intermediate element (24) by means of an internal thread (25), and that the intermediate element (24) is mounted in a non-rotating arrangement although it remains axially moveable and in a driven connection with the draw rod (6).

4. The clamping device in accordance with one of Claims 1 to 3,
**characterized in that**,
the bell (14) is in a driven connection with the intermediate element (24) by means of a roller thread drive (27, 27') provided, in a preferred embodiment, with a roller return function.

5. The clamping device in accordance with one of Claims 1 to 4,
**characterized in that**,
in order to achieve a driven connection between the intermediate element (24) and the draw rod (6), at least two reversing levers (41) are provided in a swiveling mounting on pins (42) arranged in a fixed location, with the outer ends of the reversing levers (41) being in a driven connection with the axially moveable sliding sleeve (31) and the inner ends of the reversing levers (41) connected to the draw rod (6).

6. The clamping device in accordance with Claim 5,
**characterized in that**,
the pins (42) that carry the revering levers (41) are in a rotating mounting in the hollow shaft (21) connected to the machine spindle (5) of the machine tool (2).

7. The clamping device in accordance with Claim 5 or 6,
**characterized in that**,
the outer and/or inner ends of the reversing levers (41) are each provided with a gearing profile (43, 44) or crowned in order to engage with the gearing profiles (46, 47) worked onto the axially moveable sliding sleeve (31) and/or the draw rod (6) or with recesses worked into the draw rod.

8. The clamping device in accordance with one of Claims 1 to 4,
**characterized in that**,
at least two gears (51) or toothed segments are provided in order to bring the sliding sleeve (31) into a driven connection with the draw rod (6), with the gears (51) or toothed segments being in a rotating arrangement on a pin (52) mounted in a sleeve (55) that is in a fixed connection with the draw rod (6) and engaging in the gearing profiles (53, 54) provided on the axially moveable sliding sleeve (31) and on the hollow shaft (21) which is in a fixed connection with the machine spindle (5).

9. The clamping device in accordance with Claim 7 or 8,
**characterized in that**,
the gearing profiles (46; 53) provided on the axially moveable sliding sleeve (31) are each formed by a toothed segment (48; 46) attached to the sliding sleeve (31).

10. The clamping device in accordance with one of Claims 1 to 9,
**characterized in that**,
the bell (14) and/or the axially moveable intermediate element (24) are in a rotational mounting on the hollow shaft (21) connected to the machine spindle (2) by means of spindle bearings (37, 38).

11. The clamping device in accordance with one of Claims 1 to 10,
**characterized in that**,
the bell (14), the axially moveable intermediate element (24), the sliding sleeve (31), the bearing race (39) of the bell (14), the sleeve (55) and/or additional components of the clamping device (1, 1', 1 ") are each provided with one or more coolant ducts (63, 64, 65, 66), in a preferred embodiment in an axial arrangement.

12. The clamping device in accordance with one of Claims 1 to 11,
**characterized in that**,
the coolant ducts (63, 64, 65, 66) are provided with throttles (67), in a preferred embodiment in the end areas of the coolant ducts (63, 64, 65, 66).

## Revendications

1. Dispositif de verrouillage (1) pour machines-outils (2), équipé d'un mandrin motorisé (3) pour le serrage de la pièce à usiner (10), dont les mors de serrage (4) se laissent actionner à l'aide du dispositif de verrouillage (1) par l'intermédiaire d'une tige de traction axialement réglable (6), le dispositif de verrouillage (1) consistant en un moteur commutable (11), de préférence un servomoteur électrique ou un hydromoteur et d'éléments d'entraînement (14, 15 ou 18, 19, 24, 25, 26, 27) formant une chaîne cinématique (13) et disposés entre celui-ci et la tige de traction (6), qui permettent de transformer les mouvements de réglage rotatoires de l'élément d'entraînement (12) du moteur (11) en mouvements de réglage axiaux de la tige de traction, nécessaires au réglage des mors de serrage (4) du mandrin de serrage motorisé (3), le moteur commutable (11) servant d'élément d'entraînement et d'appui étant disposé parallèle à l'axe de la tige de traction (6),
**caractérisé en ce que**,
en tant que chaîne cinématique (13), il est prévu une cloche (14) solidaire du moteur (11), décrivant un mouvement rotatoire de préférence sur un arbre creux (21) lié à la broche (5), ainsi qu'un élément intermédiaire fixe (24) qui, en vue de la transformation des mouvements rotatoires de la cloche (14), sont liés entre eux par l'intermédiaire d'éléments filetés (25, 26 ou 25, 26, 27) s'engrenant l'un dans l'autre et que, pour l'actionnement de la tige de traction (6), l'élément intermédiaire (24) est solidaire de la tige de traction (6, 6'), soit directement soit moyennant un manchon coulissant (31) le portant.

2. Dispositif de verrouillage d'après la revendication 1,
**caractérisé en ce que**
la cloche (14) logée de préférence à l'aide d'un roulement à rouleaux (37) et d'un anneau-palier (39) sur l'arbre creux (21), est solidaire de l'élément d'entraînement (12) du moteur (11) moyennant une courroie dentée (15) un engrenage de renvoi (18, 19) ou un moyen d'entraînement similaire.

3. Dispositif de verrouillage d'après les revendications 1 ou 2,
**caractérisé en ce que**
pour la transformation des mouvements rotatoires de la cloche (14), celle-ci s'engrène moyennant un taraudage (25) dans un filetage (26) prévu sur l'élément intermédiaire (24) et que l'élément intermédiaire (24) disposé de manière fixe à la torsion et axialement déplaçable est solidaire de la tige de traction (6).

4. Dispositif de verrouillage d'après une des revendications 1 à 3,
**caractérisé en ce que**
la cloche (14) est solidaire de l'élément intermédiaire (24) moyennant un engrenage fileté à rouleaux (27, 27') équipé de préférence d'un rappel de rouleau.

5. Dispositif de verrouillage d'après une des revendications 1 à 4,
**caractérisé en ce que**
pour la liaison solidaire de l'élément intermédiaire (24) et de la tige de traction (6), il est prévu au moins deux leviers de renvoi (41) montés pivotants sur des boulons fixes (42), dont les extrémités extérieures sont solidaires du manchon coulissant axialement déplaçable (31) et dont les extrémités intérieures son solidaires de la tige de traction (6).

6. Dispositif de verrouillage d'après la revendication 5,
**caractérisé en ce que**
les boulons (42) portant les leviers de renvoi (41) sont logés en rotation dans l'arbre creux (21) lié à la broche (5) de la machine-outil (2).

7. Dispositif de verrouillage d'après les revendications 5 ou 6,
**caractérisé en ce que**
les extrémités extérieures et/ou intérieures des leviers de renvoi (41) sont conçues sous la forme d'une denture (43, 44) ou sous une forme bombée, s'engrenant dans les dentures (46, 47) pratiquées dans le manchon coulissant axialement déplaçable (31) et/ou dans la tige de traction (6), ou dans des évidements pratiqués dans la tige de traction.

8. Dispositif de verrouillage d'après une des revendications 1 à 4,
**caractérisé en ce que**
pour la liaison solidaire du manchon coulissant (31) et de la tige de traction (6), il est prévu au moins deux pignons (51) ou segments dentés logés en rotation sur un boulon (52) monté dans une douille (55) fixée rigidement à la tige de traction (6), qui s'engrènent dans les dentures (53, 54) prévues dans le manchon coulissant axialement déplaçable (31) et dans l'arbre creux (21) fixé rigidement à la broche (5).

9. Dispositif de verrouillage d'après les revendications 7 ou 8,
**caractérisé en ce que**
les dentures (46; 53) prévues sur le manchon coulissant axialement déplaçable (31) sont formées respectivement par un segment denté (48; 56) fixé sur le manchon.

10. Dispositif de verrouillage d'après une des revendications 1 à 9,
**caractérisé en ce que**,
moyennant les logements (37, 38), la cloche (14) ou/et l'élément intermédiaire axialement déplaçable (24) est logé/sont logés en rotation sur l'arbre creux (21) lié à la broche (5).

11. Dispositif de verrouillage d'après une des revendications 1 à 10,
**caractérisé en ce que**
la cloche (14), l'élément intermédiaire axialement déplaçable (24), le manchon coulissant (31), l'anneau-palier (39) de la cloche (14), la douille (55) et/ou d'autres composants du dispositif de verrouillage (1, 1', 1") sont munis respectivement d'un ou de plusieurs canaux à liquide de refroidissement (63, 64, 65, 66) orientés de préférence en direction axiale.

12. Dispositif de verrouillage d'après une des revendications 1 à 11,
**caractérisé en ce que**
les canaux à liquide de refroidissement (63, 64, 65, 66) sont munis d'étrangleurs (67) prévus de préférence dans leurs extrémités.
